# EUROPEAN PATENT APPLICATION

(11) **EP 4 485 361 A1**
(43) Date of publication of application: **01.01.2025**
(21) Application number: 23182096.0
(22) Date of filing: 28.06.2023
(51) Int. Cl.: G06T 7/80

(54) **A METHOD FOR DETERMINING A TEST RESULT OUTCOME BY USING A MOBILE DEVICE**

(71) Applicant: Calpro AS, 1366 Lysaker (NO)
(72) Inventor: THORSTENSEN, Jostein, 0493 OSLO (NO); ZONETTI, Simone, 0363 OSLO (NO); SIKORSKI, Krzysztof, 0651 OSLO (NO); MØRK, Einar, 1369 STABEKK (NO)
(74) Representative: Zacco Denmark A/S

(57) **Abstract**

It is disclosed a computer-implemented method (800) for determining a test result outcome by using a mobile device (100) equipped with a camera (102) arranged to capture image data depicting a test arrangement (106). The method comprises obtaining (802) the image data using the mobile device (100), identifying (804) a colour reference section (CRS) (114) in the image data, wherein the CRS (114) is coloured with at least one reference colour (), determining (806) a camera response function specific for a mobile device type associated with the mobile device () by, for each of a plurality of different exposure times, registering (808) a camera response for the at least one reference colour, wherein said camera response corresponds to a photon flux, and combining (810) the camera responses for the plurality of different exposure times into the camera response function, obtaining (812) a test image data set depicting a test section (122) of the test arrangement (106), wherein the test section (122) is coloured differently for different test result outcomes, transforming (814) the test image data set into a camera-neutral test image data set by using the camera response function, determining (816) an intensity of a test object (124), such as a test line or a test dot, in the test section (122) based on the camera-neutral test image data set, and determining (818) the test result outcome by fitting the intensity to a calibration curve, wherein the test result outcome corresponds to a concentration of an analyte held in the test section (122).

## Description

### Technical Field

The invention relates to rapid tests, e.g. lateral flow immunoassay tests, and how these tests can be read by using a mobile phone application or the like. More particularly, it is related to a computer-implemented method for determining a test result outcome based on image data depicting a test arrangement by using a mobile device, as well as a test arrangement and a mobile device.

### Background Art

During the last couple of years, using rapid tests in combination with mobile phone applications for distant monitoring purposes have gained an increasing interest. By having the rapid tests, often based on lateral flow immunoassay principles, and the mobile phone application, it is possible for a patient to perform tests in a reliable manner from home, which is both convenient and cost-efficient. In addition, by increasing the accessibility, it is also made possible to perform tests more frequently, thereby providing more information about the patient, which in turn provides for improved treatment. For instance, by using this approach, symptoms can be detected at an early stage, which provides for that treatment may be initiated at an earlier stage compared to if the patient is seeking a doctor's appointment once the symptoms are obvious.

As an example, the company Calpro is offering CalproSmart^{™}, a self-test for monitoring patients suffering from chronic inflammatory bowel disease (IBD), such as Ulcerative Colitis and Crohn's disease. The test is based on Calprotectin, an inflammatory biomarker. Since this biomarker will increase 3-6 months before clinical symptoms can be detected, this test provides for that it is possible to detect and treat I BD at an early stage.

To provide for that a test result outcome, that is, to what extent the biomarker is increased, is determined and forwarded to a remote server, the mobile phone application can be used. The general approach of this is capturing image data depicting a test section of a test cassette by using a camera of the mobile phone, processing the image data such that the extent the biomarker is increased is quantified, and transmitting the test result outcome to the remote server such that the information can be made available for further analysis by a healthcare professional.

Several techniques are available for determining the test result outcome based on the image data depicting the test section by using a mobile phone or the like. For instance, in order to provide for the test section in the test cassette can be identified in a reliable manner, a test frame can be used. The test frame is provided with a cut-out having the same contour as the test cassette such that the test cassette can be fitted into the frame. The test frame may be provided with reference markings such that the test frame can be identified via the captured image data.

Even though there are different mobile applications for reading and determining test result outcomes available today, there are still improvements to be made. For instance, there is a need for improved accuracy. By being able to determine changes in the test section more accurately, it is namely made possible to make more reliable conclusions based on the test result outcome.

### Summary

It is an object of the invention to at least partly overcome one or more of the above-identified limitations of the prior art. In particular, it is an object to provide a method for determining the test result outcome that is less device dependent. Today, many mobile phones are configured to provide image data that are considered appealing by users, but not necessarily configured to provide image data that consistently and correctly reflects changes. For instance, a change in luminosity of the test line in the test section may give rise to different image data output by different camera-equipped mobile phones. Since the changes of the test line corresponds to the increase of the biomarker, using different types of mobile phones for determining the test result outcome may therefore result in that different outcomes are provided, which negatively affects the reliability.

According to a first aspect it is provided a computer-implemented method for determining a test result outcome by using a mobile device equipped with a camera arranged to capture image data depicting a test arrangement. The method may comprise
obtaining the image data using the mobile device,
identifying a colour reference section (CRS) in the image data depicting the test arrangement, wherein the CRS is coloured with at least one reference colour,
determining a camera response function specific for a mobile device type associated with the mobile device by
   for each of a plurality of different exposure times,
   registering a camera response for the at least one reference colour, wherein said camera response corresponds to a photon flux, combining the camera responses for the plurality of different exposure times into the camera response function,
obtaining a test image data set depicting a test section of the test arrangement, wherein the test section is coloured differently for different test result outcomes,
transforming the test image data set into a camera-neutral test image data set by using the camera response function,
determining anintensity of a test object, such as a test line or a test dot, in the test section based on the camera-neutral test image data set, and
determining the test result outcome by fitting the intensity to a calibration curve, wherein the test result outcome corresponds to a concentration of an analyte held in the test section.

An advantage with using this method is that the test result outcome determination is not affected, or at least to a lesser degree affected, by which type of mobile device that is used.

Further, by making use of that a collected number of photons over an exposure time in the camera correspond to a photon flux associated with a specific colour times the exposure time, it is made possible to form a gamma fit in a reliable manner by making use of reference colours, having a specified photon flux, on the test arrangement and that the exposure times can be controlled in a precise manner.

The test arrangement may comprise a test cassette placed inside a test frame, wherein the CRS is provided on the test frame and the test section is provided on the test cassette.

By having the CRS placed on the test frame, the reference colour or colours are provided on a part that can be re-used several times. As an effect, the CRS can be produced with high accuracy and still provide cost-efficiency.

The test arrangement may be provided with at least one two-dimensional code, such as an Aruco code, for facilitating spatial alignment of the camera of the mobile device with respect to the test arrangement.

By having the two-dimensional codes, existing software modules for identifying such codes can be used. Part of identifying the codes is to determine how these are spatially aligned, and this can be utilized in this context to provide information on how the test arrangement is placed with respect to the mobile device, which in turn is relevant for the assessment of the colour changes in the test section. Put differently, instead of only making use of an identification code or other information provided by the two-dimensional code, which is usually the case, information about the spatial alignment, determined in order to be able to determine the identification code, is herein used for receiving information about the positioning of the test arrangement relative to the mobile device.

The at least one reference colour may comprise a bright colour and a dark colour, wherein the camera response for the bright colour is greater than the camera response for the dark colour. Put differently, the bright colour is related to a photon flux that is greater than a photon flux related to the dark colour.

The method may further comprise, prior to the step of identifying the CRS, activating a flash on the camera to reduce variance in illumination.

The CRS may be matte to reduce impact of reflections.

The method may further comprise, prior to the step of identifying the CRS, detecting movement of the camera by using an accelerometer provided in the mobile device, in case the movement is below a threshold, continue with the identifying of the CRS.

The obtaining the image data, identifying the CRS, determining the camera response function and capturing the at least one test image data set may be performed within a time span of less than 1 second such that effects of changes in light conditions are reduced.

According to a second aspect it is provided a test arrangement comprising
a sample reception section for receiving a test liquid sample,
a test section configured to be coloured differently for different test result outcomes, and to display a test object, such as a test line or a test dot,
at least one colour reference section (CRS) coloured with at least one reference colour providing for that a camera response function specific for a mobile device type of a mobile device equipped with a camera can be determined by using a plurality of different exposure times for the camera, in turn providing for that test image data depicting the test section can be transformed into a camera-neutral test image data set by using the camera response function, in turn providing for that an intensity of the test object can be determined based on the camera-neutral test image data set, in turn providing for that a test result outcome can be determined by fitting the intensity to a calibration curve, wherein the test result outcome corresponds to a concentration of an analyte held in the test section.

The same features and advantages as presented above with reference to the first aspect also apply for this aspect.

The test arrangement may further comprising a test cassette arranged to be placed inside a test frame, wherein the CRS may be provided on the test frame and the test section may be provided on the test cassette.

The test arrangement may further comprise at least one two-dimensional code, such as an AruCo code, for facilitating spatial alignment of the camera of the mobile device with respect to the test arrangement.

A position of the CRS relative to a position of the at least one two-dimensional code may be pre-set such that the position of the CRS can be determined based on the position of the at least one code.

The at least one reference colour may comprise a bright colour and a dark colour, wherein the camera response for the bright colour is greater than the camera response for the dark colour.

According to a third aspect it is provided a mobile device comprising a processor device, a memory and a camera, wherein the processor device may be configured to
obtain the image data using the camera,
identify a colour reference section (CRS) in the image data depicting a test arrangement, wherein the CRS may be coloured with at least one reference colour,
determine a camera response function specific for a mobile device type associated with the mobile device by
for each of a plurality of different exposure times,
   register a camera response for the at least one reference colour, wherein said camera response corresponds to a photon flux,
   combine the camera responses for the plurality of different exposure times into the camera response function,
obtain a test image data set depicting a test section of the test arrangement, wherein the test section is coloured differently for different test result outcomes,
transform the test image data set into a camera-neutral test image data set by using the camera response function,
determine an intensity of a test object, such as a test line or a test dot, in the test section based on the camera-neutral test image data set, and
determine the test result outcome by fitting the intensity to a calibration curve, wherein the test result outcome corresponds to a concentration of an analyte held in the test section.

The same features and advantages as presented above with respect to the first or second aspect also apply to this aspect.

A system for determining a test result outcome by analysing image data depicting a test arrangement, said system comprising a server and a mobile device equipped with a camera, wherein the system is configured to
obtain the image data using the camera,
identify a colour reference section (CRS) in the image data depicting a test arrangement, wherein the CRS is coloured with at least one reference colour,
determine a camera response function specific for a mobile device type associated with the mobile device by
for each of a plurality of different exposure times,
   register a camera response for the at least one reference colour, wherein said camera response corresponds to a photon flux,
   combine the camera responses for the plurality of different exposure times into the camera response function,
obtain a test image data set depicting a test section of the test arrangement, wherein the test section is coloured differently for different test result outcomes,
transform the test image data set into a camera-neutral test image data set by using the camera response function,
determine an intensity of a test object, such as a test line or a test dot, in the test section based on the camera-neutral test image data set, and
determine the test result outcome by fitting the intensity to a calibration curve, wherein the test result outcome corresponds to a concentration of an analyte held in the test section.

The same features and advantages as presented above with respect to the first, second or third aspect also apply to this aspect.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 generally illustrates a mobile device placed above a test arrangement comprising a test cassette and a test frame.
Fig. 2 is a diagram illustrating a camera response as a function of actual colour for a plurality of different devices.
Fig. 3 is a diagram illustrating a camera response function generated by gamma fitting a number of data points obtained at different exposure times.
Fig. 4 is a diagram illustrating data points related to a dark and a bright colour, respectively, for different exposure times.
Fig. 5 is a diagram illustrating a camera response function formed by combining the data points illustrated in fig. 4 and the photon flux related to the two different colours.
Fig. 6 is a flow chart illustrating an example of how the mobile device can be used for determining a test result outcome of the test arrangement.
Fig. 7 illustrates three modules further explaining how the mobile device can be used for determining the test result outcome.
Fig. 8 is a flowchart illustrating a method for determining the test result outcome by using the mobile device equipped with the camera arranged to capture the image data depicting the test arrangement.

### Detailed Description

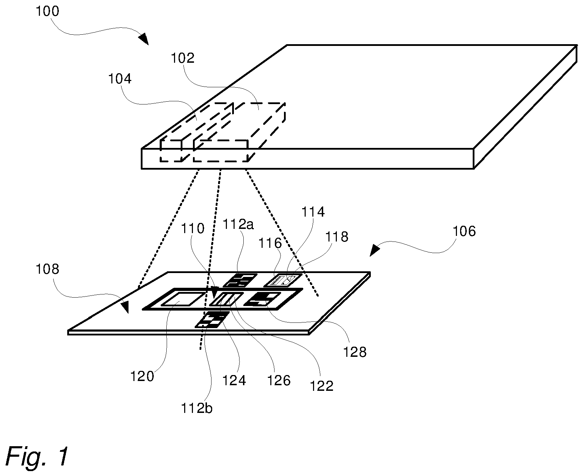

Fig. 1 illustrates by way of example a mobile device 100, provided with a camera 102 and a flash 104, as well as a test arrangement 106 comprising a test frame 108 and a test cassette 110, placed inside the test frame 108 during use. The mobile device 100 may be a mobile phone, but it may also be a tablet or any other device that can be used by a user to capture image data depicting the test arrangement 106 and processing this image data such that a test result outcome can be determined. The test arrangement 106 may be a so-called lateral flow test, also sometimes referred to as a lateral flow immunochromatographic assay or rapid test. The test arrangement 106 may be used to detect different diseases or health conditions. By way of example, the test cassette 110 may be using the biomarker Calprotectin to detect inflammatory states.

As illustrated, the test frame 108 can be provided with a cut-out for holding the test cassette 110. By using this principle, the test frame 108 can be re-used for several test cassettes, and the frame may be linked to a patient and/or to a batch of test cassettes. The test cassette 110 may however be a single-use device. In addition to having one part of the test arrangement 106 that can be re-used and another part that can be made for one-time use, the test frame 108 may be equipped with first and second two-dimensional codes 112a, 112b, such as ArUco codes. These codes may be used for identifying the test frame 108, but also for providing spatial reference points. After the codes have been identified in the image data captured by the camera 102, a position of the mobile device 100, in which the camera 102 forms part, may be spatially aligned with respect to the test frame 108. Even though not illustrated, the mobile device 100 may be provided with a display and a user interface. The user interface may be arranged such that a user is guided to place the test arrangement 106 such that this is placed in a field of view of the camera 102. For instance, in the user interface, boxes in which the first and second two-dimensional codes are intended to be placed can be provided via the user interface such that the user can adjust the position of the mobile device with respect to the test arrangement.

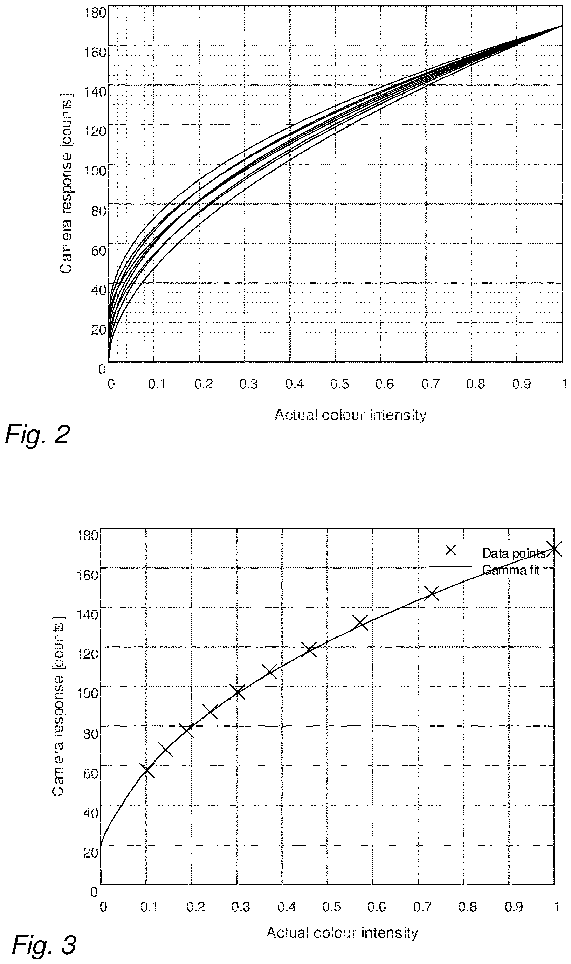

In addition to the first and second two-dimensional codes 112a, 122b, the test frame 108 may also be provided with a colour reference section (CRS) 114. As the name suggests, the CRS 114 may be coloured in specific reference colours such that these colours can be used as references for assuring that colour intensities of the test cassette 110 are interpreted device-agnostically, as will be further explained below with reference to Fig. 2 to 8.

The CRS 114 may be placed at a specific distance and/or distances from the first and/or second two-dimensional code 112a, 112b. By having a position of the CRS 114 linked to position(s) of the first and/or second two-dimensional codes 112a, 112b, the CRS 114 can be identified more reliably in the image data once the position(s) of the first and/or second two-dimensional code 112a, 112b are identified.

In the example illustrated in fig. 1, the CRS 114 comprises two different colours, a dark colour 116 and a bright colour 118. Even though it is illustrated that two different colours are used in the CRS 114, it is possible to have only one and it is also possible to have more than two colours.

In the test cassette 110, it may be provided a sample section 120, sometimes also referred to as a sample pad, for receiving a sample fluid. Once the sample fluid is received by the sample section 120, this is transferred to a test section 122 in which the outcome of the test can be presented in the form of a test object 124, such as a test line or a test dot. Between the sample section 120 and the test section 122, even though not illustrated, a so-called conjugate section may be provided. In the conjugate section, the sample fluid can be put in contact with reagents and a bio-marker such that reactions occur that can be reflected in the test object 124 and/or a control object 126. While the test object 124 serves the purpose of reflecting presence of a particular substance in the sample fluid such that e.g. indications of the health condition can be reflected, the control object 126 serves the purpose of reflecting that the sample fluid has been transported adequately from the sample section 120 to the test section 122. As illustrated, the test object 124 and the control object 126 may be lines, but they may also have other geometrical shapes, such as dots.

The test cassette 110 may also be provided with a two-dimensional code, herein referred to as cassette two-dimensional code 128, for identification purposes. By having two-dimensional codes on both the test cassette 110 and the test frame 108, a relative position between the two can be determined accurately since the two-dimensional codes may also serve as spatial reference positions. Still an advantage with having two-dimensional codes on both the test cassette 110 and the test frame 108 is that these can be identified and once identified, information related to these can be retrieved via e.g. a remote server. For instance, in case the colour changes related to the test object 124 has been changed from one batch of test cassettes 110 to another, this may be compensated for if the test cassette is possible to identify. In a similar manner, by having the test frame 108 provided with one or several two-dimensional codes, or other similar identification marks, it is possible to retrieve data related to previously performed test sessions. An advantage with this is that if a current test session deviates from the previous sessions, e.g. the CRS 114 give rise to significantly different colour information in the image data captured by the camera compared to previous test sessions, this may be indicated to the user via the mobile device 100. For instance, the user may be asked to confirm that he or she is using a new device for determining the test result.

Fig. 2 is a diagram illustrating camera responses for a plurality of different mobile devices. As illustrated, the camera responses for different colours are non-linear and also different for different devices. Put differently, by way of example, a colour of the test object 124 is not directly proportional to an output voltage from an image sensor. One reason for this is that there is a dark offset. In addition to this, a gamma value may be different for different mobile devices 100, i.e. they may be set to reflect the colour intensities in different ways. Due to the differences that may occur between the different devices, as illustrated in fig. 2, the colour changes cannot be determined in a precise manner based on the camera response alone, but the type of mobile device must be known to make such link. The camera response is to be understood to be a number of counts registered by the image sensor.

Fig. 3 illustrates another diagram. In this diagram, a camera response function has been made by using a number of data points. The different data points are associated to different exposure times. Thus, by using different exposure times it is made possible to determine a so-called gamma fit that will serve as the camera response function, i.e. the link between the counts registered by the image sensor and the colour of the test object. In the example illustrated in fig. 3, the dark offset is 20 counts.

The reason why different exposure times can be used in this manner is due to that the image sensor is arranged to register photons. Further, the colour is represented by photon flux. By way of example, a bright colour will provide more photons per time unit compared to a dark colour. In addition, the number of photons generated is proportional to the photon flux times an exposure time. Thus, by using the fact that the number of photons generated depends on both the photon flux and the exposure time, the relationship between the number of photons and the photon flux, i.e. colour, can be determined by having the colour fixed and registering the number of photons for different exposure times.

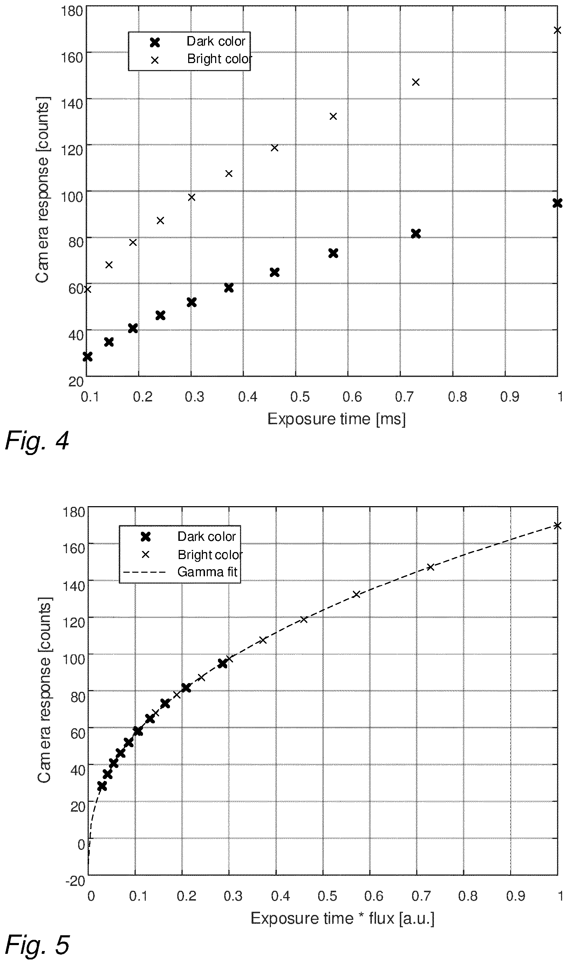

To provide an even better camera response function, it is possible to use two or more colours. As illustrated in fig. 4, by having two colours, the dark colour 116 and the bright colour 118, and registering the number of counts, i.e. the number of photons registered by the image sensor, for different exposure times, two curves are obtained. Since the photon flux of the dark colour, indiciated by bold x:es in fig. 4 and 5, is lower compared to the bright colour, indicated by plain x:es, the camera response for the dark colour is lower than the camera response for the bright colour, as illustrated.

Once having the camera response for the different exposure times determined, the photon flux of the two colours may also be weighed in by multiplying the exposure times with the photon flux of the two different colours. After such operation, the x-axis is rescaled and the gamma fit can be determined based on data points both from the dark and bright colour, as illustrated in fig. 5.

In case illumination is changing during a process of determining the gamma fit, this will have a negative effect. Therefore, constant illumination is preferable. By using the flash 104 of the camera 102, less variance in illumination can be achieved.

Further, light reflections may also have a negative effect of the process of determining the gamma fit. To reduce presence of reflections, the test frame 108 may be matte such that less reflections occur.

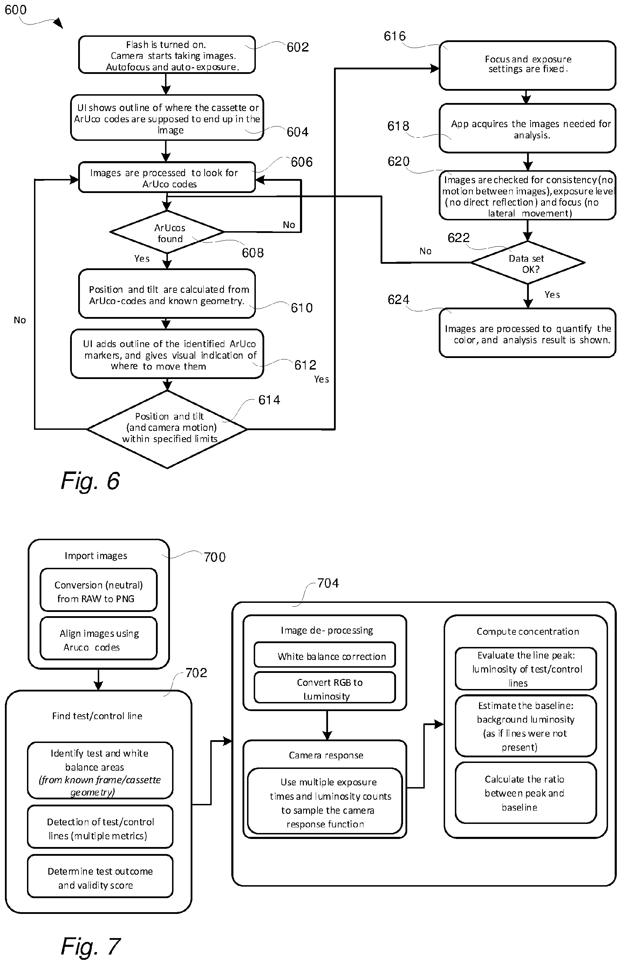

Fig. 6 is a flowchart illustrating an example of a method 600 for determining the gamma fit, that is, the camera response function, by making use of different exposure times such that, as an effect, more reliable test result outcome determination can be achieved.

Upon initiation, the flash 104 may be turned on 602, and the camera may start capturing image data. Autofocus and auto-exposure may be used at this stage.

Via a user interface (Ul) of the mobile device 100, an outline may be provided 604 for the user on how the test cassette 110 and the test frame 108 are to be placed such that spatial alignment of the test arrangement 106 and the mobile device 100 is generally achieved. After general spatial alignment is achieved, image data can be captured and the first and/or second two-dimensional codes 112a, 112b of the test frame and/or the cassette two-dimensional code 128, herein exemplified by ArUco (Augmented Reality University of Cordoba) codes, can be identified 606. Once the two-dimensional codes are identified 608, positions and tilt of the two-dimensional codes relative to the mobile device 100 or other known geometry can be determined 610. By having the positions and tilt of the two-dimensional codes relative to the mobile device 100 determined, the user interface of the mobile device may provide 612 indicators on how the mobile device 100 is to be moved such that the spatial alignment of the mobile device and the test arrangement is improved.

In case the position and tilt of the test arrangement 106 with respect to the mobile device 100 are within specified limits 614, focus and exposure settings are fixed 616. Put differently, if the mobile device and the test arrangement are identified to be placed at a distance from each other corresponding to a reference distance, that one or several rotational angle differences of the mobile device and the test arrangement are identified to be within set limits, and also that inclination angle differences between the two are within set limits, this can result in that the positions of the mobile device is considered spatially aligned with respect to the test arrangement. In addition to assuring spatial alignment, it is also possible at this stage to assure that there is no camera motion, or at least camera motion below a threshold. In case the mobile device is provided with an accelerometer, this can be used for identifying whether or not the camera is in motion.

After having captured image data using the fixed focus and exposure settings, a software application, e.g. the mobile phone application, can be used for capturing 618 the image data. To assure that the image data depicts the test arrangement in a consistent manner 620, a sequence of images may be captured. In case there is no motion between consecutive image frames, it can be determined that no camera motion has been affecting the image data. In addition, exposure levels can assessed by identifying whether or not reflections are occurring in the image data. Focus deviations can be assessed by identifying if lateral motion has occurred or not. This may be made by identifying if lateral motion has occurred between consecutive image frames.

In case the image data set is considered to be consistent 622, that is, no deviations in terms of motion between consecutive frames, no exposure deviations and/or no focus deviations, the image data may be used for quantifying 624 the colour intensity changes occurring in the test section 122. On the other hand, in case the image data is not considered consistent, the process will go back to the step of identifying 606 the two-dimensional codes.

In the step of determining 610 the position and tilt of the two-dimensional codes, the tilt may be determined by taking into account data from an accelerometer built-in in the mobile device 100. In a similar manner, the built-in accelerometer may also be used in the step 620 when assessing the consistency. The data from the accelerometer may be taken into account when determining the tilt and/or the motion.

Fig. 7 illustrates, by way of example, three modules for determining the test result outcome. In a first module 700, the image data can be converted from raw format to PNG format, and thereafter the image data can be aligned by using the two-dimensional codes as described above. In a second module 702, test section and white balance areas of the test arrangement can be identified and used for setting white balance. In addition, the test object and the control object in the test section can be identified. Further, in this example, the test outcome and a validity score can be determined. In this example, the test outcome may comprise a positive outcome in which a non-zero test line and the control line are found, a negative outcome in which only the control line is found, and a faulty outcome in which no control line is found. The validity score may be a numerical value that indicates how certain the test outcome is. The test outcome and the validity score may in combination provide the test result outcome.

In a third module 704, the image data may be de-processed such that white balance can be corrected and, in addition, the image data may be transformed from RGB to luminosity. After the image de-processing, the camera response function can be determined by using multiple exposure times and luminosity counts as described above. In a third module 704, concentration can be computed. This may be achieved by evaluate line peak, i.e. the luminosity of the test object and the control object. In addition, a baseline for background luminosity can be established. Once having the background luminosity determined, the concentration can be calculated as a ratio between the peaks of the test object and control object and the baseline. Even if the test is negative, i.e. no test object, the analysis can be performed to provide data one the control object intensity.

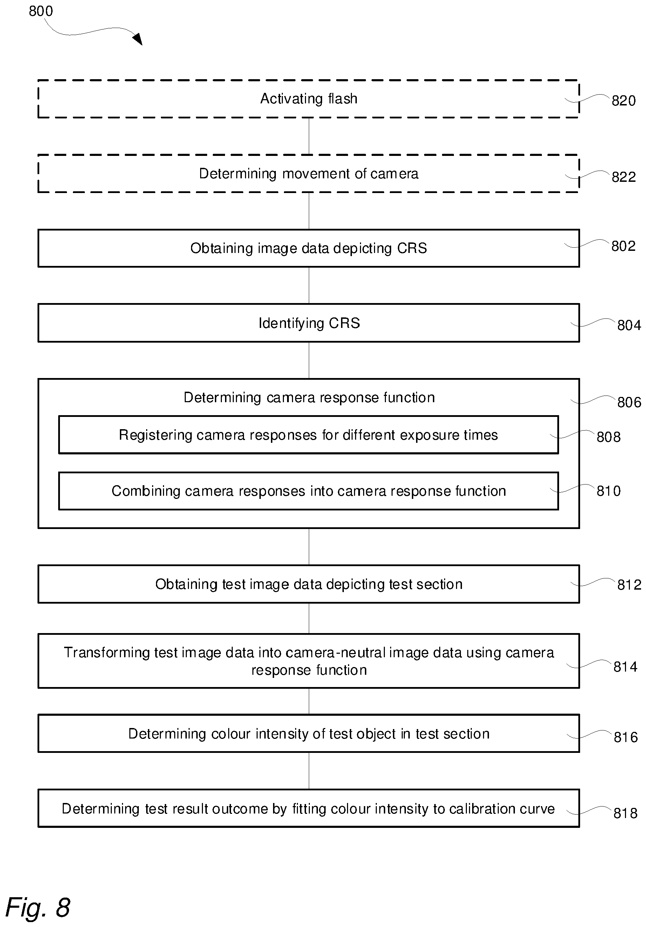

Fig. 8 is a flowchart illustrating a method 800 according for determining a test result outcome by using the mobile device 100 equipped with a camera. The method may comprise obtaining 802 image data using the mobile device, and identifying 804 the CRS 114 in the image data. Once the CRS 114 is identified, the camera response function specific for a mobile device type associated with the mobile device can be determined 806. This step may comprise the sub-steps of registering 808 camera responses for different exposure times, and combining 810 camera responses into the camera response function. Thereafter, the method may comprise obtaining 812 test image data depicting the test section, transforming 814 the test image data into camera-neutral image data using the camera response function, determining 816 the intensity of the test object in the test section and determining 818 the test result outcome by fitting the intensity to a calibration curve.

Optionally, before the step of obtaining 802 the image data, the method may comprise activating 820 the flash on the camera to reduce variance in illumination.

Optionally, prior to the step of identifying 804 the CRS, the method may comprise detecting 822 movement of the camera by using the accelerometer provided in the mobile device, in case the movement is below a threshold, continue with the identifying of the CRS.

From the description above follows that, although various embodiments of the invention have been described and shown, the invention is not restricted thereto, but may also be embodied in other ways within the scope of the subject-matter defined in the following claims.

## Claims

1. A computer-implemented method (800) for determining a test result outcome by using a mobile device (100) equipped with a camera (102) arranged to capture image data depicting a test arrangement (106), the method comprising
obtaining (802) the image data using the mobile device (100),
identifying (804) a colour reference section (CRS) (114) in the image data depicting the test arrangement (106), wherein the CRS (114) is coloured with at least one reference colour,
determining (806) a camera response function specific for a mobile device type associated with the mobile device (100) by
for each of a plurality of different exposure times,
registering (808) a camera response for the at least one reference colour, wherein said camera response corresponds to a photon flux,
combining (810) the camera responses for the plurality of different exposure times into the camera response function,
obtaining (812) a test image data set depicting a test section (122) of the test arrangement (106), wherein the test section (122) is coloured differently for different test result outcomes,
transforming (814) the test image data set into a camera-neutral test image data set by using the camera response function,
determining (816) an intensity of a test object (124), such as a test line or a test dot, in the test section (122) based on the camera-neutral test image data set, and
determining (818) the test result outcome by fitting the intensity to a calibration curve, wherein the test result outcome corresponds to a concentration of an analyte held in the test section (122).

2. The method according to claim 1, said test arrangement (106) comprising a test cassette (110) placed inside a test frame (108), wherein the CRS (114) is provided on the test frame (108) and the test section (122) is provided on the test cassette (110).

3. The method according to claim 1 or 2, wherein the test arrangement (106) is provided with at least one two-dimensional code (112a, 112b, 128), such as an AruCo code, for facilitating spatial alignment of the camera (102) of the mobile device (100) with respect to the test arrangement (106).

4. The method according to any one of the preceding claims, wherein the at least one reference colour comprises a bright colour (118) and a dark colour (116), wherein the camera response for the bright colour is greater than the camera response for the dark colour.

5. The method according to any one of the preceding claims, further comprising, prior to the step of identifying the CRS (114), activating (820) a flash (104) on the camera (102) to reduce variance in illumination.

6. The method according to any one of the preceding claims, wherein the CRS (114) is matte to reduce impact of reflections.

7. The method according to any one of the preceding claims, further comprising, prior to the step of identifying (804) the CRS (114), detecting (822) movement of the camera (102) by using an accelerometer provided in the mobile device (100), in case the movement is below a threshold, continue with the identifying of the CRS.

8. The method according to any one of the preceding claims, wherein obtaining (802) the image data, identifying (804) the CRS (114), determining (806) the camera response function and capturing (812) the at least one test image data set are performed within a time span of less than 1 second such that effects of changes in light conditions are reduced.

9. A test arrangement (106) comprising
a sample reception section (120) for receiving a test liquid sample,
a test section (122) configured to be coloured differently for different test result outcomes, and to display a test object, such as a test line or a test dot,
at least one colour reference section (CRS) (114) coloured with at least one reference colour providing for that a camera response function specific for a mobile device type of a mobile device equipped with a camera can be determined by using a plurality of different exposure times for the camera, in turn providing for that test image data depicting the test section (122) can be transformed into a camera-neutral test image data set by using the camera response function, in turn providing for that an intensity of the test object (124) can be determined based on the camera-neutral test image data set, in turn providing for that a test result outcome can be determined by fitting the intensity to a calibration curve, wherein the test result outcome corresponds to a concentration of an analyte held in the test section (124).

10. The test arrangement (106) according to claim 9, further comprising a test cassette (110) arranged to be placed inside a test frame (108), wherein the CRS (114) is provided on the test frame (108) and the test section (122) is provided on the test cassette (110).

11. The test arrangement (106) according to claim 9 or 10, further comprising at least one two-dimensional code (112a, 112b, 128), such as an AruCo code, for facilitating spatial alignment of the camera (102) of the mobile device (100) with respect to the test arrangement (106).

12. The test arrangement (106) according to claim 11, wherein a position of the CRS relative to a position of the at least one two-dimensional code is pre-set such that the position of the CRS can be determined based on the position of the at least one code.

13. The test arrangement (106) according to any one of the claims 9 to 12, wherein the at least one reference colour comprises a bright colour (118) and a dark colour (116), wherein the camera response for the bright colour is greater than the camera response for the dark colour.

14. A mobile device (100) comprising a processor device, a memory and a camera (102), wherein the processor device is configured to
obtain the image data using the camera (102),
identify a colour reference section (CRS) (114) in the image data depicting a test arrangement (106), wherein the CRS (114) is coloured with at least one reference colour,
determine a camera response function specific for a mobile device type associated with the mobile device (100) by
for each of a plurality of different exposure times,
register a camera response for the at least one reference colour,
wherein said camera response corresponds to a photon flux,
combine the camera responses for the plurality of different exposure times into the camera response function,
obtain a test image data set depicting a test section (122) of the test arrangement (106), wherein the test section (122) is coloured differently for different test result outcomes,
transform the test image data set into a camera-neutral test image data set by using the camera response function,
determine an intensity of a test object (124), such as a test line or a test dot, in the test section (122) based on the camera-neutral test image data set, and
determine the test result outcome by fitting the intensity to a calibration curve, wherein the test result outcome corresponds to a concentration of an analyte held in the test section (122).

15. A system for determining a test result outcome by analysing image data depicting a test arrangement (106), said system comprising a server and a mobile device (100) equipped with a camera (102), wherein the system is configured to
obtain the image data using the camera (102),
identify a colour reference section (CRS) (114) in the image data depicting a test arrangement (106), wherein the CRS (114) is coloured with at least one reference colour (),
determine a camera response function specific for a mobile device type associated with the mobile device (100) by
for each of a plurality of different exposure times,
register a camera response for the at least one reference colour, wherein said camera response corresponds to a photon flux,
combine the camera responses for the plurality of different exposure times into the camera response function,
obtain a test image data set depicting a test section (122) of the test arrangement (106), wherein the test section (122) is coloured differently for different test result outcomes,
transform the test image data set into a camera-neutral test image data set by using the camera response function,
determine an intensity of a test object (124), such as a test line or a test dot, in the test section (122) based on the camera-neutral test image data set, and
determine the test result outcome by fitting the intensity to a calibration curve, wherein the test result outcome corresponds to a concentration of an analyte held in the test section (122).

## Amended claims

### Amended claims in accordance with Rule 137(2) EPC.

1. A computer-implemented method (800) for determining a test result outcome by using a mobile device (100) equipped with a camera (102) arranged to capture image data depicting a test arrangement (106), the method comprising
obtaining (802) the image data using the mobile device (100),
identifying (804) a colour reference section CRS (114) in the image data depicting the test arrangement (106), wherein the CRS (114) is coloured with at least one reference colour,
determining (806) a camera response function specific for a mobile device type associated with the mobile device (100) by
for each of a plurality of different camera exposure times,
registering (808) a camera response for the at least one reference colour, wherein said camera response corresponds to a photon flux,
combining (810) the camera responses for the plurality of different camera exposure times into the camera response function,
obtaining (812) a test image data set depicting a test section (122) of the test arrangement (106), wherein the test section (122) is coloured differently for different test result outcomes,
transforming (814) the test image data set into a camera-neutral test image data set by using the camera response function,
determining (816) an intensity of a test object (124), such as a test line or a test dot, in the test section (122) based on the camera-neutral test image data set, and
determining (818) the test result outcome by fitting the intensity to a calibration curve, wherein the test result outcome corresponds to a concentration of an analyte held in the test section (122).

2. The method according to claim 1, said test arrangement (106) comprising a test cassette (110) placed inside a test frame (108), wherein the CRS (114) is provided on the test frame (108) and the test section (122) is provided on the test cassette (110).

3. The method according to claim 1 or 2, wherein the test arrangement (106) is provided with at least one two-dimensional code (112a, 112b, 128), such as an AruCo code, for facilitating spatial alignment of the camera (102) of the mobile device (100) with respect to the test arrangement (106).

4. The method according to any one of the preceding claims, wherein the at least one reference colour comprises a bright colour (118) and a dark colour (116), wherein the camera response for the bright colour is greater than the camera response for the dark colour.

5. The method according to any one of the preceding claims, further comprising, prior to the step of identifying the CRS (114), activating (820) a flash (104) on the camera (102) to reduce variance in illumination.

6. The method according to any one of the preceding claims, wherein the CRS (114) is matte to reduce impact of reflections.

7. The method according to any one of the preceding claims, further comprising, prior to the step of identifying (804) the CRS (114), detecting (822) movement of the camera (102) by using an accelerometer provided in the mobile device (100), in case the movement is below a threshold, continue with the identifying of the CRS.

8. The method according to any one of the preceding claims, wherein obtaining (802) the image data, identifying (804) the CRS (114), determining (806) the camera response function and capturing (812) the at least one test image data set are performed within a time span of less than 1 second such that effects of changes in light conditions are reduced.

9. A mobile device (100) comprising a processor device, a memory and a camera (102), wherein the processor device is configured to
obtain image data using the camera (102),
identify a colour reference section (CRS) (114) in the image data depicting a test arrangement (106), wherein the CRS (114) is coloured with at least one reference colour,
determine a camera response function specific for a mobile device type associated with the mobile device (100) by
for each of a plurality of different camera exposure times,
register a camera response for the at least one reference colour, wherein said camera response corresponds to a photon flux,
combine the camera responses for the plurality of different camera exposure times into the camera response function,
obtain a test image data set depicting a test section (122) of the test arrangement (106), wherein the test section (122) is coloured differently for different test result outcomes,
transform the test image data set into a camera-neutral test image data set by using the camera response function,
determine an intensity of a test object (124), such as a test line or a test dot, in the test section (122) based on the camera-neutral test image data set, and
determine the test result outcome by fitting the intensity to a calibration curve, wherein the test result outcome corresponds to a concentration of an analyte held in the test section (122).

10. A system for determining a test result outcome by analysing image data depicting a test arrangement (106), said system comprising a server and a mobile device (100) equipped with a camera (102), wherein the system is configured to
obtain the image data using the camera (102),
identify a colour reference section CRS (114) in the image data depicting a test arrangement (106), wherein the CRS (114) is coloured with at least one reference colour,
determine a camera response function specific for a mobile device type associated with the mobile device (100) by
for each of a plurality of different camera exposure times,
register a camera response for the at least one reference colour, wherein said camera response corresponds to a photon flux,
combine the camera responses for the plurality of different camera exposure times into the camera response function,
obtain a test image data set depicting a test section (122) of the test arrangement (106), wherein the test section (122) is coloured differently for different test result outcomes,
transform the test image data set into a camera-neutral test image data set by using the camera response function,
determine an intensity of a test object (124), such as a test line or a test dot, in the test section (122) based on the camera-neutral test image data set, and
determine the test result outcome by fitting the intensity to a calibration curve, wherein the test result outcome corresponds to a concentration of an analyte held in the test section (122).
